Europäisches Patentamt

European Patent Office

Office européen des brevets

(19)

(11) Numéro de publication : **0 025 385**
**B1**

(12) **FASCICULE DE BREVET EUROPÉEN**

(45) Date de publication du fascicule du brevet :
**11.05.83**

(21) Numéro de dépôt : **80401238.3**

(22) Date de dépôt : **29.08.80**

(51) Int. Cl.³ : **C 08 F 8/32**, C 08 F 8/44,
B 01 J 41/14

(54) Préparation de résines échangeuses d'anions par bromation de polymères vinylaromatiques et produits obtenus.

(30) Priorité : 07.09.79 FR 7922394

(43) Date de publication de la demande :
18.03.81 Bulletin 81/11

(45) Mention de la délivrance du brevet :
11.05.83 Bulletin 83/19

(84) Etats contractants désignés :
BE CH DE FR GB IT LI NL

(56) Documents cités :
FR A 1 071 608
GB A 1 456 974
US H 888 007

(73) Titulaire : RHONE-POULENC SPECIALITES CHIMI-
QUES
"Les Miroirs" 18, Avenue d'Alsace
F-92400 Courbevoie (FR)

(72) Inventeur : Dromard, Adrien
73-75 rue Brillat Savarin
F-75013 (FR)
Inventeur : Ramanadin
Montée de la Daude
F-30100 Ales (FR)

(74) Mandataire : Lepere, Michelle et al
RHONE POULENC RECHERCHES Service Brevets
Chimie et Polymères 25, Quai Paul Doumer
F-92408 Courbevoie Cedex (FR)

Préparation de résines échangeuses d'anions par bromation de polymères vinylaromatiques
et produits obtenus

L'invention concerne un procédé de préparation de résines échangeuses d'anions.

Les résines échangeuses d'anions commerciales sont généralement préparées par chlorométhylation au moyen d'éther mono- ou bis-chlorométhylique de polymères styréniques, suivie d'une amination. Cependant, les éthers chlorométhyliques étant cancérigènes et corrosifs sont soumis à des règles très strictes de manipulation.

Afin de s'affranchir de la mise en œuvre de ces produits, différentes techniques ont été proposées. Elles consistent généralement à polymériser des composés alkylvinylaromatiques halogénés, puis à aminer les produits obtenus ; mais les composés alkylvinylaromatiques halogénés à polymériser sont obtenus soit par halogénation directe, dont le rendement est faible à cause des réactions parasites, soit par une technique compliquée et longue pouvant provoquer des pertes de produit ; ou bien à traiter des polymères de composés alkylvinylaromatiques par des dérivés chlorés ou bromés toutefois, dans la plupart des cas, outre l'halogénation du groupe alkyle recherchée, il y a halogénation du noyau aromatique et des atomes de carbone de la chaîne, et risque de polyhalogénation du groupe alkyle, nuisible à la préparation de l'échangeur d'anions ; de plus les résines échangeuses d'anions obtenues manquent de stabilité mécanique et leur porosité ne peut être obtenue que par réticulation.

Le procédé de l'invention permet de préparer des résines échangeuses d'anions à partir de polymères alkylvinylaromatiques, sans utilisation d'éthers chlorométhyliques et sans présenter les inconvénients précités ; il y a monohalogénation sélective du groupe alkyle ; il n'y a pas halogénation du noyau aromatique, ni des carbones de la chaîne et aucune interaction non spécifique ; les résines obtenues sont stables mécaniquement et leur porosité, lorsqu'elle est nécessaire, n'est pas tributaire d'une réticulation.

Le procédé de préparation de résines échangeuses d'anions, selon l'invention, consiste en une polymérisation d'au moins un composé alkylvinylaromatique seul ou en combinaison avec au moins un monomère copolymérisable, suivie de la bromation, puis de l'amination du polymère obtenu et est caractérisé en ce que le monomère alkylvinylaromatique possédant au moins un groupe alkyle contenant 1 à 3 atomes de carbone est polymérisé avec jusqu'à 30 % en poids d'un monomère réticulant vinyltrialcoxysilane ou vinyltrihalogénosilane en présence d'un support minéral et en ce que la bromation est obtenue par réaction entre les groupes alkyle du polymère et un N-bromoamide ou un N-bromoimide.

Les monomères mis en œuvre dans le procédé sont des composés vinylaromatiques substitués par au moins un groupe méthyle, éthyle ou propyle linéaire ou ramifié. Ce sont, par exemple, les isomères des mono- ou di-méthyl-, éthyl- ou propyl-vinylbenzènes et du méthyléthylvinylbenzène ; les triméthyl-, triéthyl- ou tripropyl-vinylbenzènes ; le diméthyléthylvinylbenzène ; le diéthylméthylvinylbenzène. Ils sont mis en œuvre seuls ou en combinaison entre eux en toutes proportions et/ou avec d'autres monomères copolymérisables comme le styrène, les acrylates et méthacrylates d'alkyle, dont le groupe alkyle contient 1 à 5 atomes de carbone, l'acrylonitrile, le butadiène, en proportions comprises entre 0 et 50 % en poids par rapport au mélange des monomères et avec au moins un monomère réticulant, tel que divinylbenzène, vinyltrialcoxysilane, vinyltrihalogénosilane, en proportions comprises entre 0 et 30 % et de préférence entre 0,2 et 15 % en poids par rapport au(x) monomère(s).

Les supports minéraux, poreux ou non, mis en œuvre possèdent une granulométrie comprise entre 1 μm et 5 mm et sont représentés par des billes de verre, des silices, des oxydes métalliques comme l'oxyde de titane ou les alumines.

Pour la polymérisation, le ou les monomères et éventuellement un initiateur donnant des radicaux libres sont mis en solution dans un solvant, le support est imprégné de la solution, puis le solvant est évaporé et le ou les monomères sont polymérisés, selon tout procédé connu en soi, pour obtenir à la surface du support un film de polymère de moins de 15 mg/m2.

Dans le cas où le support est poreux, cette porosité est conservée, le polymère formant également un film à l'intérieur des pores.

En tant que solvants, pour l'imprégnation du support, peuvent être utilisés tous produits solvants du ou des monomères et de l'initiateur, dont le point d'ébullition est de préférence le plus bas possible pour favoriser l'évaporation ultérieure. Ce sont, entre autres : l'éther éthylique, le benzène, l'acétone, l'acétate d'éthyle, les hydrocarbures halogénés comme le chlorure de méthylène.

La bromation du polymère sur support est obtenue par réaction entre les groupes alkyle du polymère et l'agent de bromation, éventuellement en présence d'un initiateur, dans un milieu organique.

Les agents de bromation, sont représentés par les N-bromoamides, tels que : N-bromoacétamide, N, N-dibromobenzène-sulfonamides ; les N-bromoimides, tels que : N-bromosuccinimide, N-bromophtalimide, N-bromoglutarimide, bromo-3 hydantoïne, dibromo-1,3 diméthyl-5,5 hydantoïne. Ces agents de bromation sont mis en œuvre en quantités comprises entre 0,1 et 3 fois la stoechiométrie molaire par rapport au(x) groupe(s) alkyle du polymère. De préférence, la quantité d'agent de bromation est voisine de la stoechiométrie molaire, qui donne, à la résine échangeuse d'anions à obtenir, la capacité maximum d'échange. Ainsi, la capacité d'échange de la résine échangeuse d'anions pourra varier à volonté, suivant la quantité d'agent de bromation utilisé.

L'initiateur de bromation est choisi parmi les peroxydes d'acyle, comme le peroxyde de benzoyle, le

peroxyde de ditertiobutyle, les azonitriles, comme l'azobisisobutyronitrile et est utilisé seul ou en combinaison. La réaction de bromation peut également être initiée au moyen de radiations ultraviolettes.

Le milieu organique dans lequel le polymère sur support est insoluble, l'agent de bromation est insoluble ou très peu soluble, et l'initiateur est soluble ou insoluble, est représenté, par exemple, par l'acide acétique, le dioxane, le cyclohexane et de préférence par le tétrachlorure de carbone. La quantité de milieu organique à employer est supérieure à 200 % en poids par rapport au support revêtu de polymère.

La température de bromation, fonction de l'initiateur éventuel, est généralement comprise entre 40 et 130 °C et est de préférence la température d'ébullition du milieu organique.

La réaction est complète après des temps compris entre 30 mm et 5 h. Le produit formé est alors filtré et lavé avec un solvant de l'amide ou imide formé, comme, par exemple, l'eau et un solvant du N-bromoamide, ou N-bromoimide comme, par exemple, l'acétone, les acétates organiques.

Pour obtenir la résine échangeuse d'anions, on fait réagir le support revêtu de polymère bromé avec une amine primaire, secondaire ou tertiaire, réaction effectuée selon toute technique connue.

Les résines échangeuses d'anions obtenues selon le procédé de l'invention se présentent sous forme de particules poreuses ou non de taille comprise entre 1 μm et 5 mm. Elles sont utilisables en déminéralisation de liquides, catalyses chimique et enzymatique ; purification des métaux et acides aminés dans les industries chimique, pharmaceutique, alimentaire et métallurgique.

On donne, ci-après, à titre indicatif et non limitatif, des exemples de réalisation de l'invention, dans lesquels tous les pourcentages sont donnés en poids.

## Exemple 1

100 g de silice poreuse ayant une granulométrie de 100-200 μm, une surface spécifique de 37 m²/g, un diamètre poreux moyen de 120 nm (1 200 Å) et un volume poreux de 0,95 ml/g sont introduits dans une solution formée de 150 ml de chlorure de méthylène, 44,5 g de vinyltoluène (mélange d'isomères para et méta 60/40), 13 g de vinyltriéthoxysilane et 0,5 g d'azobisisobutyronitrile. Le chlorure de méthylène est évaporé à température ambiante et pression atmosphérique, puis la silice imprégnée est chauffée à 120 °C pendant 6 h, pour obtenir la réticulation.

La silice est alors mise en suspension dans 300 ml d'acétate d'éthyle et chauffée à l'ébullition, pendant 6 h pour éliminer le polymère non réticulé. Après essorage, lavage à l'acétone et séchage à 80 °C, on obtient une silice revêtue de polymère, dont le taux de carbone est de 10,6 % en poids.

50 g de la silice obtenue sont introduits dans 200 ml de tétrachlorure de carbone contenant en suspension 10 g de N-bromosuccinimide et 0,8 g de peroxyde de benzoyle, puis la suspension est chauffée à l'ébullition pendant 4 h. Après refroidissement, la silice est essorée, lavée à l'acétone, puis à l'eau et enfin séchée à 50 °C. Le produit obtenu présente les caractéristiques suivantes :

| | |
|---|---|
| taux de carbone | 9 % |
| taux de brome | 6,80 % |
| taux d'azote | 0 % |

Le produit est mis en suspension dans 200 ml d'une solution aqueuse à 10 % de triméthylamine et laissé en contact 4 h à température ambiante. Après filtration, lavage à l'eau et à l'acétone et séchage sous vide à 50 °C, on obtient une silice revêtue d'une résine échangeuse d'anions portant des groupements fonctionnels $-N^{(+)}-(CH_3)_3Br^{(-)}$, dont les caractéristiques sont les suivantes :

| | |
|---|---|
| taux de carbone | 9,30 % |
| taux de brome | 3,20 % |
| taux d'azote | 0,54 % |
| quantité de polymère fixé | 4,40 mg/m² |
| capacité d'échange | 0,39 meq/g |

## Exemple 2

L'exemple 1 est répété, mais les 50 g de silice revêtue de polymère dont le taux de carbone est 10,6 % en poids, sont introduits dans 200 ml de tétrachlorure de carbone contenant en suspension 8,5 g de bromosuccinimide au lieu de 10 g et 0,8 g d'azobisisobutyronitrile à la place du peroxyde de benzoyle.

Le produit bromé possède les caractéristiques suivantes :

| | |
|---|---|
| taux de carbone | 8,90 % |
| taux de brome | 6,40 % |
| taux d'azote | 0 % |

et la silice revêtue de résine échangeuse d'anions, les caractéristiques suivantes :

| | |
|---|---|
| taux de carbone | 9,20 % |

# 0 025 385

| taux de brome | 2,80 % |
|---|---|
| taux d'azote | 0,48 % |
| quantité de polymère fixé | 4,20 mg/m$^2$ |
| capacité d'échange | 0,35 meq/g |

## Exemple 3

L'exemple 1 est répété avec 12,7 g de N-bromophtalimide au lieu de 10 g de N-bromosuccinimide. Caractéristiques du produit bromé :

| taux de carbone | 9,50 % |
|---|---|
| taux de brome | 6,70 % |
| taux d'azote | 0 % |

Caractéristiques de la résine échangeuse d'anions :

| taux de carbone | 9,90 % |
|---|---|
| taux de brome | 3,20 % |
| taux d'azote | 0,44 % |
| quantité de polymère fixé | 4,50 mg/m$^2$ |
| capacité d'échange | 0,32 meq/g |

## Exemple 4

L'exemple 1 est répété avec 17,6 g de dibromo-1,3 diméthyl-5,5 hydantoïne. Caractéristiques du produit bromé :

| taux de carbone | 9,50 % |
|---|---|
| taux de brome | 6,60 % |
| taux d'azote | 0 % |

Caractéristiques de la résine échangeuse d'anions :

| taux de carbone | 9,80 % |
|---|---|
| taux de brome | 3,50 % |
| taux d'azote | 0,39 % |
| quantité de polymère fixé | 4,50 mg/m$^2$ |
| capacité d'échange | 0,27 meq/g |

## Exemple 5

L'exemple 1 est répété avec de l'acide acétique à la place de tétrachlorure de carbone. Caractéristiques du produit bromé :

| taux de carbone | 9,10 % |
|---|---|
| taux de brome | 6,10 % |
| taux d'azote | 0 % |

Caractéristiques de la résine échangeuse d'anions :

| taux de carbone | 9,80 % |
|---|---|
| taux de brome | 2,90 % |
| taux d'azote | 0,42 % |
| quantité de polymère fixé | 4,40 mg/m$^2$ |
| capacité d'échange | 0,30 meq/g |

## Exemple 6

L'exemple 1 est répété, mais les 0,8 g de peroxyde de benzoyle sont remplacés par l'irradiation d'une lampe à vapeur de mercure basse pression, et le chauffage à l'ébullition est maintenu 2 heures et non 4 heures.
Caractéristiques du produit bromé :

| taux de carbone | 9,10 % |
|---|---|

4

| | |
|---|---|
| .taux de brome | 6,70 % |
| taux d'azote | 0 % |

Caractéristiques de la résine échangeuse d'anions :

| | |
|---|---|
| taux de carbone | ·9,20 % |
| taux de brome | 3,25 % |
| taux d'azote | 0,52 % |
| quantité de polymère fixé | 4,40 mg/m² |
| capacité d'échange | 0,38 meq/g |

## Exemple 7

50 g de silice poreuse ayant une granulométrie de 100-200 µm une surface spécifique de 37 m²/g, un diamètre poreux moyen de 120 nm (1 200 Å) et un volume poreux de 0,95 ml/g sont introduits dans une solution formée de 100 ml de chlorure de méthylène, 35,5 g de diméthyl-2,4 styrène, 2,25 g de vinyltriéthoxysilane et 0,25 g d'azobisisobutyronitrile. Le chlorure de méthylène est évaporé à température ambiante et pression atmosphérique, puis la silice imprégnée est chauffée à 130 °C pendant 20 heures sous pression autogène, pour obtenir la réticulation.

La silice est alors mise en suspension dans 300 ml d'acétate d'éthyle et chauffée à l'ébullition pendant 6 heures, pour éliminer le polymère non réticulé. Après essorage, lavage à l'acétone et séchage à 80 °C, une silice revêtue de polymère est obtenue, dont le taux de carbone est de 12,3 %.

50 g de la silice obtenue sont introduits dans 200 ml de tétrachlorure de carbone contenant en suspension 10,5 g de N-bromosuccinimide et 0,8 g de peroxyde de benzoyle, puis la suspension est chauffée à l'ébullition pendant 4 heures. Après refroidissement, la silice est essorée, lavée à l'acétone, puis à l'eau et enfin séchée à 50 °C. Le produit obtenu présente les caractéristiques suivantes :

| | |
|---|---|
| taux de carbone | 11,1 % |
| taux de brome | 8,05 % |
| taux d'azote | 0 % |

Le produit est mis en suspension dans 200 ml d'une solution aqueuse à 10 % de triméthylamine et laissé en contact 4 h à température ambiante. Après filtration, lavage à l'eau et à l'acétone et séchage sous vide à 50 °C, on obtient une silice revêtue d'une résine échangeuse d'anions portant des groupements fonctionnels —$N^{(+)}$—$(CH_3)_3Br^{(-)}$ dont les caractéristiques sont les suivantes :

| | |
|---|---|
| taux de carbone | 13,50 % |
| taux de brome | 5,90 % |
| taux d'azote | 1,20 % |
| quantité de polymère fixé | 7,20 mg/m² |
| capacité d'échange | 0,68 meq/g |

## Exemple 8

10 g de silice revêtue de polymère bromé identique à celle de l'exemple 7 sont mis en suspension dans 40 ml de diéthylamine, laissés en contact 4 h à température ambiante, filtrés, lavés à l'eau et à l'acétone, puis séchés sous vide à 50 °C. Une résine échangeuse d'anions est obtenue, qui porte des groupements fonctionnels —$N$—$(C_2H_5)_2$ et présente les caractéristiques suivantes :

| | |
|---|---|
| taux de carbone | 15,03 % |
| taux de brome | 1,56 % |
| taux d'azote | 1,16 % |
| quantité de polymère fixé | 7 mg/m² |
| capacité d'échange | 0,65 meq/g |

## Exemple 9

100 g de silice ayant une granulométrie de 5-7 µm, une surface spécifique de 600 m²/g, un diamètre poreux moyen de 4 nm (40 Å) et un volume poreux de 0,91 ml/g sont introduits dans une solution formée de 300 ml de chlorure de méthylène, 53,5 g de vinyltoluène (mélange d'isomères para et méta 60/40), 13,5 g de vinyltriéthoxysilane et 0,5 g d'azobisisobutyronitrile. Le chlorure de méthylène est évaporé à température ambiante et pression atmosphérique, puis la silice imprégnée est chauffée à 120 °C pendant 6 heures, pour obtenir la réticulation.

La silice est alors mise en suspension dans 300 ml d'acétate d'éthyle et chauffée à ébullition pendant 6 heures, pour éliminer le polymère non réticulé. Après essorage, lavage à l'acétone et séchage à 80 °C, une silice revêtue de polymère est obtenue, dont le taux de carbone est de 23,1 %.

50 g de la silice obtenue sont introduits dans 200 ml de tétrachlorure de carbone contenant en suspension 23,3 g de N-bromosuccinimide et 0,8 g de peroxyde de benzoyle, puis la suspension est chauffée à ébullition pendant 4 heures. Après refroidissement, la silice est essorée, lavée à l'acétone, puis à l'eau et enfin séchée à 50 °C. Le produit obtenu présente les caractéristiques suivantes :

| | |
|---|---|
| taux de carbone | 20,30 % |
| taux de brome | 15,70 % |
| taux d'azote | 0 % |

Le produit est mis en suspension dans 200 ml d'une solution aqueuse à 10 % de triméthylamine et laissé en contact 4 heures à température ambiante. Après filtration, lavage à l'eau et à l'acétone et séchage sous vide à 50 °C, on obtient une silice revêtue d'une résine échangeuse d'anions portant des groupements fonctionnels —N$^{(+)}$—(CH$_3$)$_3$Br$^{(-)}$, dont les caractéristiques sont les suivantes :

| | |
|---|---|
| taux de carbone | 20,70 % |
| taux de brome | 5,90 % |
| taux d'azote | 0,92 % |
| quantité de polymère fixé | 0,68 mg/m$^2$ |
| capacité d'échange | 0,67 meq/g. |

**Revendications**

1. Procédé de préparation de résines échangeuses d'anions qui consiste en une polymérisation d'au moins un composé alkylvinylaromatique seul ou en combinaison avec au moins un monomère copolymérisable, suivie de la bromation, puis de l'amination du polymère obtenu et est caractérisé en ce que le monomère alkylvinylaromatique possédant au moins un groupe alkyle contenant 1 à 3 atomes de carbone est polymérisé avec jusqu'à 30 % en poids d'un monomère réticulant vinyltrialcoxysilane ou vinyltrihalogénosilane en présence d'un support minéral et en ce que la bromation est obtenue par réaction entre les groupes alkyle du polymère et un N-bromoamide ou un N-bromoimide.

2. Procédé selon la revendication 1, caractérisé en ce que le polymère forme à la surface du support un film de moins de 15 mg/m$^2$.

3. Procédé selon la revendication 1, caractérisé en ce que la quantité d'agent de bromation représente 0,1 à 3 fois la stoechiométrie molaire par rapport au(x) groupe(s) alkyle du polymère sur support.

4. Résines échangeuses d'anions obtenues par le procédé de la revendication 1, sous forme de particules de 1 µm à 5 mm.

**Claims**

1. A process for the preparation of anion exchange resins, comprising polymerising at least one alkyl vinylaromatic compound, alone or in combination with at least one copolymerisable monomer, followed by bromination and then amination of the polymer produced, characterised in that the alkyl vinylaromatic monomer having at least one alkyl group containing from 1 to 3 carbon atoms is polymerised with up to 30 % by weight of a vinyltrialkoxysilane or vinyltrihalosilane cross-linking monomer in the presence of a mineral carrier, and that bromination is effected by reaction between the alkyl groups of the polymer and an N-bromoamide or an N-bromoimide.

2. A process according to claim 1 characterised in that the polymer forms a film of less than 15 mg/m$^2$ at the surface of the carrier.

3. A process according to claim 2 characterised in that the amount of bromination agent represents from 0.1 to 3 times the molar stoichiometry relative to the alkyl group or groups of the polymer on the carrier.

4. Anion exchange resins produced by the process of claim 1, in the form of particles of from 1 µm to 5 mm.

**Ansprüche**

1. Verfahren zur Herstellung von Anionenaustauscherharzen durch Polymerisation mindestens einer alkylvinylaromatischen Verbindung, einzeln oder in Kombination mit mindestens einem copolymerisierbaren Monomeren und anschließender Bromierung sowie Aminierung des erhaltenen Polymerisats, dadurch gekennzeichnet, daß das alkylvinyl-aromatische Monomere, das mindestens eine Alkylgruppe mit 1 bis 3 Kohlenstoffatomen aufweist, mit bis zu 30 Gew.-% eines vernetzenden Vinyltrialkoxysilan- oder Vinyltrihalogensilan-Monomeren in Gegenwart eines anorganischen Trägers polymerisiert wird und daß die Bromierung durch Reaktion zwischen den Alkylgruppen des Polymeren und einem N-Bromamid oder einem N-Bromimid ausgeführt wird.

2. Verfahren nach Anspruch 1, dadurch gekennzeichnet, daß das Polymerisat auf der Oberfläche des Trägers einen mindestens 15 mg/m² starken Film bildet.

3. Verfahren nach Anspruch 1, dadurch gekennzeichnet, daß die Menge des Bromierungsmittels das 0,1- bis 3-fache der stöchiometrisch erforderlichen Mol-Menge bezogen auf die Alkylgruppe(n) des Polymerisats auf dem Träger ausmacht.

4. Anionenaustauscherharze, erhalten durch das Verfahren nach Anspruch 1 in Form von 1 µm bis 5 mm großen Teilchen.